# NEW EUROPEAN PATENT SPECIFICATION

(11) **EP 0 191 311 B2**
(45) Date of publication and mention of the opposition decision: **09.12.1998**
(45) Mention of the grant of the patent: 06.11.1991
(21) Application number: 86100531.2
(22) Date of filing: 17.01.1986
(51) Int. Cl.: A23B 7/00, A23B 7/02, A23B 7/153

(54) **Treatment of fruit and vegetable material**
Behandlung von Früchten und Gemüse
Traitement pour fruits et légumes

(30) Priority: 07.02.1985 US 699172
(43) Date of publication of application: 20.08.1986
(73) Proprietor: SOCIETE DES PRODUITS NESTLE S.A., 1800 Vevey (CH)
(72) Inventor: Wissgott, Ulrich, CH-1814 La Tour-de-Peilz (CH); Berberat, Alexis, CH-1802 Corseaux (CH)
(74) Representative: Marchant, James Ian

(56) References cited:
- WO-A-83/00801
- FR-A- 1 323 984
- FR-A- 1 585 399
- FR-A- 2 197 531
- FR-A- 2 370 438
- FR-A- 2 510 873
- GB-A- 1 405 984
- GB-A- 1 506 166
- US-A- 3 352 691
- US-A- 4 344 971
- Handbuch der Lebensmittelchemie, Springer-Verlag , 1968, Band V/2. Teil, Seite 414
- Karl Duch : Handlexikon der Kochkunst, Verlag Albert Pröspter KG, Kempten, 8. Auflage, 1972, Seite 587
- Davidis-Schulze : Praktisches Kochbuch Kleins Druck- und Verlagsanstalt, Lengerich, 1960, Seite 154
- "Flüssiges Obst" Jahrgang 4o, Heft 12, Dezember 1973, Seiten 488-493, Wucherpfennig et al "Kieselsolvariante und ihr Einfluss auf die Schönungswirkung von Gelatine"
- Rotraud Degner : Das Kochbuch fürs Leben Verlag Solitude, Stuttgart, 1957, Seite 208

## Description

The present invention relates to treating fruit and vegetable materials, more particularly inhibiting the formation of a reddish colouration during heat treatment thereof.

The problem of pink or red discolouration has been observed and described for various fruits and vegetables, such as bananas, pears, apples, cabbage, cauliflower, beans and white onions. It is due to heat processing, for example, in canning (thermal sterilisation) and dehydration (concentration, drying) of the fruit or vegetable either whole, sliced or in the form of a homogeneous pulp. For example, banana pulp, sometimes referred to as banana puree, is a pure banana product particularly desirable for the baby food market. However, bananas fall into a class of low-acid foods (i.e. having a pH above 4.6) which, when sterilised in glass jars for the production of a baby food product, require a higher degree of sterilisation than acid fruits and it has been found that an undesirable reddish colouration is formed during such sterilisation.

We have established that this reddish colouration is caused by the excessive heat treatment during sterilisation. Reddening is usually accelerated in rate and enhanced in intensity by increased temperature, heating time and acidification. Nevertheless. If the banana pulp is acidified to a pH of approximately 4.2. for example with citric acid, then a higher degree of sterilisation is unnecessary and consequently the undesirable reddish colouration is not formed. However, the addition of acid affects the taste of the product and sugar usually has to be added to fry to mask the acidity.

Certain additives are known which can prevent discolouration in foods, for example, sodium bisulphite, cysteine and complexing compounds such as phosphates, or ethylene diamine tetraacetic acid in admixture with either ascorbic acid or citric acid. However, although sodium bisulphite is effective in certain proportions for inhibiting the reddish colouration in banana pulp, its use as a food additive is questionable. With regard to cysteine, although it inhibits the reddish colouration during sterilisation, it was found upon opening the glass jars, that a repulsive odour had developed, thus making the final product unnacceptable for the consumer. Phosphates were not found to be successful in inhibiting the readish colouration and the mixtures containing ethylene diamine tetraacetic acid did not suppress the reddish colouration sufficiently.

"Handbook der lebensmittelchemie", Band V, 2 Teil, Edited by J Schormüller (Springer - Verley) 1968 discloses at page 414 that black salsify has the tendency to enzyme-dependent reddish discolouration and recommends the exclusion of air during processing and placing the prepared vegetable in 0.05% citric acid solution. The same reference at page 416 states that on heating cauliflower may be subject to a Maillard-type reaction or pink discolouration caused by the influx of heavy metal impurities, in particular iron. Addition of protein containing materials to vegetables during cooking is already known. Thus "Das Kochbuch fürs Leben" by Rotraud Degner, Verlag Solitude Stuttgart (1957) page 208 proposes the addition of some milk to the cooking water for cauliflower.

We have found, surprisingly, that the reddish colouration formed during the heat processing of fruit and vegetable materials can be inhibited by adding a protein to the fruit or vegetable material.

Accordingly, the present invention provides use of a protein to inhibit formation of a reddish colour during the heat processing treatment of a fruit or vegetable material containing leucoanthocyanidin red pigment precursors under conditions which are such as to induce formation of a reddish colour in the fruit or vegetable material, the protein being added to the fruit or vegetable material to contact the leucoanthocyanidin red pigment precursors in an amount effective to inhibit formation of the reddish colour during the heat processing treatment.

The colour development is associated with the presence of leucoanthocyanidins which are the precursors of the red pigment. The leucoanthocyanidins are colourless compounds, naturally present in various plant materials. Although we do not wish to be bound by theory, it is thought that their undesirable transformation into red pigments is due to hydrolytic and oxidative reactions which accompany the heat processing. Therefore. the present invention is applicable to fruit and vegetable materials which contain significant amounts of leucoanthocyanidins, for example bananas, pears, apples, cabbages, cauliflowers, beans and white onions.

The pink or red colouration may be formed during any heat processing treatment, for example, thermal sterilisation, pasteurisation, concentration or drying. The formation of the undesirable colour generally occurs at a temperature from 80 °C to 150 °C for a time from 3 hours to less than 1 minute, longer periods of time being required at lower temperatures. The formation of this undesirable colour during such heat processing can be prevented by the process of the present invention particularly when the temperature is from 90° C to 140° C and the time is from 2 hrs to 5 mins, especially 100° C to 130° C for from 1 hr to 15 mins.

In the case of thermal sterilisation and pasteurisation, the protein is added to the fruit or vegetable material before the sterilisation or pasteurisation treatment begins. However, with regard to dehydration, although it is preferable and more convenient to add the protein before the dehydration treatment begins, it is possible to add the protein during the treatment but before any pink colouration has formed and preferably before the temperature has reached 80° C.

The protein may be of animal or vegetable origin and is advantageously derived from milk, egg, animal tissue or soya, for example products containing substantial amounts of protein such as skim milk powder, whey protein powder, egg yolk powder, egg white powder, ovalbumine powder, gelatine or a caseinate. The protein used is preferably substantially water-soluble and may conveniently be dissolved in a little water before adding to the fruit or vegetable material.

The effective amount of protein depends on the protein quality and also on the amount of leucoanthocyanidin present in the fruit or vegetable material which may vary for the same fruit or vegetable depending on the variety and the degree of ripeness. However, the amount of protein necessary to inhibit the reddish colouration can readily be determined by trial and error and is usually at least 2% by weight based on the weight of the fruit or vegetable. Excessive amounts of protein, however, tend to provoke a brownish colouration which may or may not be undesirable. For example, in a banana product a slight brownish colouration may be considered desirable because it imparts an appearance of ripeness. The amount of protein which provokes a brownish colouration varies with the protein but generally above 12% of any protein will provoke the brown colour.

By way of illustration, the preferred amounts of skim milk powder containing 34% protein are between 2% and 5% by weight and especially from 2.5% to 4.5% by weight based on the weight of fruit or vegetable material. The preferred amounts of whey protein containing 80% protein are from 3% to 8% and especially from 4% to 7% by weight based on the weight of fruit or vegetable material. The preferred amounts of egg protein containing 25%-96% protein are from 5% to 12% and especially from 6% to 10% by weight based on the weight of the fruit or vegetable. The preferred amounts of soya protein containing 95% protein are from 4% to 8% and especially from 5% to 7% by weight based on the weight of the fruit or vegetable material. The preferred amounts of gelatin or caseinates are from 3% to 7% and especially from 4% to 6% by weight based on the weight of the fruit or vegetable material.

The fruit or vegetable material may be in any physical form, for example, whole or as solid pieces of any shape or size, a mash, or a homogeneous pulp such as a puree, provided that there is some contact between the leucoanthocyanidin pigment precursors and the protein. Preferably, the solid pieces have a volume less than 20 cubic millimetres, and in the case of bananas, apples and pears, the solid pieces are conveniently in the form of chunks or cubes especially of a size similar to the sizes normally used in canned fruit salads. Where appropriate, the fruit or vegetable is preferably stripped of its outer coating or peeled before treatment.

The treatment may be carried out by contacting the fruit or vegetable material with the protein/before the heat processing step, for instance by soaking in a solution of the protein. In the case of solid pieces, the protein solution is preferably separated before the solid pieces are heat treated.

US-A- 4344971 describes the treatment of fruits and vegetables with a particular protein, but does not concern the problem of reddish colouration during heat processing.

The present invention is further illustrated by the following examples in which the skim milk powder used contains 34% protein, the whey protein powder is a concentrate-WPF 80 sold by Pont-Hébert containing 76% protein, the egg yolk powder is dried egg yolk containing 29% protein, the egg white powder is dried egg white containing 81% protein and the ovalbumine powder contains 96% protein.

### Example 1

4 g of skim milk powder were dissolved in 10 ml tap water and then mixed with 100 g banana puree. The mixture was then filled into a 100 ml glass jar which was closed with a twist-off lid, and sterilised in an autoclave at 121°C for 30 minutes. The colour observed after sterilisation was an attractive yellow similar to the normal colour of bananas.

### Comparative Example A

By carrying out a similar procedure to that described in Example 1 but using 2 g skim milk powder, an undesirable reddish colouration was observed after sterilisation.

### Comparative Example B

By carrying out a similar procedure to that described in Example 1 but using 10 g skim milk powder, a brownish colouration was observed after sterilisation.

### Example 2

By carrying out a similar procedure to that described in Example 1 but using 4.5 g of whey protein powder instead of 4 g of skim milk powder, the colour observed after sterilisation was an attractive yellow similar to the normal colour of bananas.

### Example 3

By carrying out a similar procedure to that described in Example 2 but using 5.6 g of whey protein powder, the colour observed after sterilisation was again an attractive yellow similar to the normal colour of bananas.

### Comparative Example C

By carrying out a similar procedure to that described in Example 2 but using 2.2 g of whey protein powder, the colour observed after sterilisation was an undesirable salmon pink.

### Comparative Example D

By carrying out a similar procedure to that described in Example 2 but using 8.8 g of whey protein powder, the colour observed after sterilisation was brown.

### Example 4

By carrying out a similar procedure to that described in Example 1 but using 6.3 g of egg yolk powder instead of 4 g of skim milk powder, the colour observed after sterilisation was an attractive yellow similar to the normal colour of bananas.

### Comparative Example E

By carrying out a similar procedure to that described in Example 4 but using only 2.5 g of egg yolk powder, the colour observed after sterilisation was an undesirable salmon pink.

### Example 5

By carrying out a similar procedure to that described in Example 1 but using 8.8 g of egg white powder instead of 4 g of skim milk powder, the colour observed after sterilisation was an attractive yellow similar to the normal colour of bananas.

### Comparative Example F

By carrying out a similar procedure to that described in Example 5 but using only 2.2 g of egg white powder, the colour observed after sterilisation was an undesirable salmon pink.

### Example 6

By carrying out a similar procedure to that described in Example 1 but using 8.8 g of ovalbumine powder instead of 4 g skim milk powder, the colour observed after sterilisation was an attractive yellow similar to the normal colour of bananas.

### Comparative Example G

By carrying out a similar procedure to that described in Example 6 but using only 3.8 g of ovalbumine powder, the colour observed after sterilisation was an undesirable pink.

### Example 7

Separate 100 g samples of pure banana puree and banana puree to which has been added 5 g of whey protein powder were placed in glass jars which were closed with a lid and placed in a bath containing boiling water. The colour of the banana puree in each jar was observed every half hour and the results are shown in the following Table I

**TABLE I**

| Heating time (hrs) | Colour of banana puree without additive | Colour of banana puree with addition of protein |
|---|---|---|
| 0.5 | Yellow | Yellow |
| 1.0 | Yellow | Yellow |
| 1.5 | Pink | Yellow |
| 2.0 | Pink | Yellow |
| 2.5 | Pink | Yellow |
| 3.0 | Red | Pink |
| 3.5 | Red | Pink |
| 4.0 | Red | Pink |
| 4.5 | Red | Pink |
| 5.0 | Red | Red |

As clearly shown the discolouration of banana puree is suppressed for a significantly long period of time when whey protein is added before the thermal treatment.

### Example 8

Pears were mashed to a pulp and 5% weight/weight of whey protein powder were added. The mixture was then filled into a glass jar and sterilised at 121° C for 30 minutes. After sterilisation, the colour of the pulp was yellow, similar to the natural colour of pear pulp.

### Comparative Example H

Cubes of pears similar to those normally used in canned fruit salads were put into a syrup containing 20% sugar and sterilised in glass jars at 121 ° C for 30 minutes. Both the pears and the syrup were found to be red coloured after this sterilisation.

### Example 9

By following a similar procedure to that described in Example 1 but using 5 g of gelatin powder (FLUKA) instead of 4 g of skim milk powder, the colour observed after sterilisation was an attractive yellow similar to the natural colour of bananas.

### Comparative Example J

By following a similar procedure to that described in Example 9 but using only 1 g of gelatin powder (FLUKA), the colour observed after sterilisation was an undesirable pink.

### Example 10

By following a similar procedure to that described in Example 1 but using 5 g of calcium caseinate instead of 4 g of skim milk powder, the colour observed after sterilisation was an attractive yellow similar to the natural colour of bananas.

### Comparative Example K

By following a similar procedure to that described in Example 10 but using only 2 g of calcium caseinate, the colour observed after sterilisation was an undesirable pink.

### Example 11

100 g of pears similar to those normally used in canned fruit salads were cut into cubes and soaked for one hour in 100 ml of an aqueous solution containing 5 % by weight of whey protein powder based on the weight of water. The protein solution was then separated from the pear cubes which were then filled into glass jars together with a syrup containing 20% sugar and sterilised at 121° C for 30 minutes. After sterilisation the colour of the pears was unchanged.

## Claims

1. Use of a protein to inhibit formation of a reddish colour during the heat processing treatment of a fruit or vegetable material containing leucoanthocyanidin red pigment precursors under conditions which are such as to induce formation of a reddish colour in the fruit or vegetable material, the protein being added to the fruit or vegetable material to contact the leucoanthocyanidin red pigment precursors in an amount effective to inhibit formation of the reddish colour during the heat processing treatment.

2. Use according to claim 1 characterized in that the fruit or vegetable materials are bananas, pears, apples, cabbages, cauliflowers, beans or white onions.

3. Use according to claim 1 characterized in that the fruit or vegetable material is stripped or peeled and used in the form of a homogeneous pulp.

4. Use according to claim 1 characterized in that the fruit is pure banana pulp.

5. Use according to claim 1 characterized in that the fruit or vegetable material is stripped or peeled and used in the form of solid pieces.

6. Use according to claim 1 characterized in that the fruit or vegetable material is in the form of pear cubes.

7. Use according to claim 1 characterized in that the protein is added to the fruit or vegetable material before the heat processing treatment.

8. Use according to claim 3 characterized in that the treatment of the fruit or vegetable material with the protein is achieved by soaking the fruit or vegetable material in a solution of the protein after which the mixture is heat-processed.

9. Use according to claim 5 characterized in that the treatment of the solid pieces with the protein is achieved by soaking the solid pieces in a solution of the protein and the protein solution is separated before the solid pieces are heat-processed.

10. Use according to claim 1 characterized in that the heat processing treatment is thermal sterilization, pasteurization, concentration or drying.

11. Use according to claim 1 characterized in that the heat processing treatment is carried out at a temperature from 90°C to 140°C for a period of from 1 hour to 5 minutes.

12. Use according to claim 1 characterized in that the substantially water-soluble protein is a protein derived from milk, egg, animal tissue or soya.

13. Use according to claim 1 characterized in that the protein is skim milk powder, whey protein powder, egg white powder, egg yolk powder, ovalbumine powder, a caseinate or gelatin.

14. Use according to claim 1 characterized in that the protein is a skim milk powder containing 34% protein used in an amount from 2.5% to 4.5% by weight based on the weight of fruit or vegetable material.

15. Use according to claim 1 characterized in that the protein is a whey protein powder containing 80% protein used in an amount from 4% to 7% by weight based on the weight of fruit or vegetable material.

16. Use according to claim 1 characterized in that the protein is an egg protein containing 25%-96% protein used in an amount from 6% to 10% by weight based on the weight of fruit or vegetable material.

17. Use according to claim 1 characterized in that the protein is a soya protein containing 95% protein used in an amount from 5% to 7% by weight based on the weight of fruit or vegetable material.

18. Use according to claim 1 characterized in that the protein is gelatin or a caseinate used in an amount from 4% to 6% by weight based on the weight of fruit or vegetable material.

## Patentansprüche

1. Verwendung eines Proteins zum Inhibieren der Ausbildung einer rötlichen Farbe während der Wärmebehandlung von Obst-oder Gemüsematerial mit einem Gehalt an Leucoanthocyanidin-Rotpigmentvorläufern unter Bedingungen, die eine Bildung einer rötlichen Farbe in dem Obst- oder Gemüsematerial induzieren, wobei das Protein zu dem Obst- oder Gemüsematerial zum Kontaktieren der Leucoanthocyanidin-Rotpigmentvorläufer in einer Menge zugesetzt wird, die zum Inhibieren der Ausbildung der rötlichen Farbe während der Wärmebehandlung wirksam ist.

2. Verwendung nach Anspruch 1, dadurch gekennzeichnet, daß die Obst- oder Gemüsematerialien Bananen, Birnen, Äpfel, Kohl, Blumenkohl, Bohnen oder weiße Zwiebeln sind.

3. Verwendung nach Anspruch 1, dadurch gekennzeichnet, daß das Obst- oder Gemüsematerial enthülst oder geschält ist und in Form einer homogenen Pulpe verwendet wird.

4. Verwendung nach Anspruch 1, dadurch gekennzeichnet, daß das Obst reiner Bananenbrei ist.

5. Verwendung nach Anspruch 1, dadurch gekennzeichnet, daß das Obst- oder Gemüsematerial enthülst oder geschält ist und in Form von festen Stücken verwendet wird.

6. Verwendung nach Anspruch 1, dadurch gekennzeichnet, daß das Obst- oder Gemüsematerial in Form von Birnenwürfeln vorliegt.

7. Verwendung nach Anspruch 1, dadurch gekennzeichnet, daß das Protein zu dem Obst- oder Gemüsematerial vor der Wärmebehandlung zugesetzt wird.

8. Verwendung nach Anspruch 3, dadurch gekennzeichnet, daß die Behandlung des Obst- oder Gemüsematerials mit dem Protein durch Tränken des Obst- oder Gemüsematerials in einer Lösung des Proteins vorgenommen wird, wonach das Gemisch wärmebehandelt wird.

9. Verwendung nach Anspruch 5, dadurch gekennzeichnet, daß die Behandlung der festen Stücke mit dem Protein durch Tränken der festen Stücke in einer Lösung des Proteins vorgenommen wird und die Proteinlösung abgetrennt wird, bevor die festen Stücke wärmebehandelt werden.

10. Verwendung nach Anspruch 1, dadurch gekennzeichnet, daß die Wärmebehandlung eine Hitzesterilisation, Pasteurisation, ein Konzentrieren oder ein Trocknen ist.

11. Verwendung nach Anspruch 1, dadurch gekennzeichnet, daß die Wärmebehandlung bei einer Temperatur von 90°C bis 140°C während einer Zeitdauer von 1 Stunde bis 5 Minuten ausgeführt wird.

12. Verwendung nach Anspruch 1, dadurch gekennzeichnet, daß das im wesentlichen wasserlösliche Protein ein von Milch, Ei, tierischem Gewebe oder Soja stammendes Protein ist.

13. Verwendung nach Anspruch 1, dadurch gekennzeichnet, daß das Protein Magermilchpulver, Molkeproteinpulver, Eiweißpulver, Eigelbpulver, Ovalbuminpulver, ein Kaseinat oder Gelatine ist.

14. Verwendung nach Anspruch 1, dadurch gekennzeichnet, daß das Protein ein 34 % Protein enthaltendes Magermilchpulver ist und in einer Menge von 2,5 bis 5,5 Gew.-%, bezogen auf das Gewicht des Obst- oder Gemüsematerials, verwendet wird.

15. Verwendung nach Anspruch 1, dadurch gekennzeichnet, daß das Protein ein 80 % Protein enthaltendes Molkeproteinpulver ist und in einer Menge von 4 bis 7 Gew.-%, bezogen auf das Gewicht des Obst- oder Gemüsematerials, verwendet wird,

16. Verwendung nach Anspruch 1, dadurch gekennzeichnet, daß das Protein ein 25 bis 96 % Protein enthaltendes Eiprotein ist und in einer Menge von 6 bis 10 Gew.-%, bezogen auf das Gewicht des Obst- oder Gemüsematerials, verwendet wird.

17. Verwendung nach Anspruch 1, dadurch gekennzeichnet, daß das Protein ein 95 % Protein enthaltendes Sojaprotein ist und in einer Menge von 5 bis 7 Gew.-%, bezogen auf das Gewicht des Obst- oder des Gemüsematerials, verwendet wird.

18. Verwendung nach Anspruch 1, dadurch gekennzeichnet, daß das Protein Gelatine oder ein Kaseinat ist und in einer Menge von 4 bis 6 Gew.-%, bezogen auf das Gewicht des Obst- oder Gemüsematerials, verwendet wird.

## Revendications

1. Utilisation d'une protéine pour inhiber la formation d'une couleur rougeâtre au cours du traitement thermique d'une substance à base de fruits ou de légumes, contenant des précurseurs de pigments rouges consistant en leucoanthocyanidines, dans des conditions qui sont telles qu'elles induisent la formation d'une couleur rougeâtre dans la substance à base de fruits ou de légumes, la protéine étant ajoutée à la substance à base de fruits ou de légumes pour la mise en contact avec les précurseurs de pigments rouges consistant en leucoanthocyanidines en une quantité efficace pour inhiber la formation de la couleur rougeâtre au cours du traitement thermique.

2. Utilisation suivant la revendication 1, caractérisée en ce que les substances à base de fruits ou de légumes sont des bananes, des poires, des pommes, des choux, des choux-fleurs, des haricots ou des oignons blancs.

3. Utilisation suivant la revendication 1, caractérisée en ce que la substance à base de fruits ou de légumes est débarrassée de ses enveloppes ou pelée et utilisée sous forme d'une pulpe homogène.

4. Utilisation suivant la revendication 1, caractérisée en ce que le fruit est la banane, sous forme d'une pulpe pure.

5. Utilisation suivant la revendication 1, caractérisée en ce que la substance à base de fruits ou de légumes est débarrassée de ses enveloppes ou pelée et utilisée sous forme de morceaux solides.

6. Utilisation suivant la revendication 1, caractérisée en ce que la substance à base de fruits ou de légumes consiste en cubes de poires.

7. Utilisation suivant la revendication 1, caractérisée en ce que la protéine est ajoutée à la substance à base de fruits ou de légumes avant le traitement thermique.

8. Utilisation suivant la revendication 3, caractérisée en ce que le traitement de la substance à base de fruits ou de légumes avec la protéine est effectué par immersion de la substance à base de fruits ou de légumes dans une solution de la protéine, puis par traitement thermique du mélange.

9. Utilisation suivant la revendication 5, caractérisée en ce que le traitement des morceaux solides avec la protéine est effectué par immersion des morceaux solides dans une solution de la protéine et séparation de la solution de protéine avant le traitement thermique des morceaux solides.

10. Utilisation suivant la revendication 1, caractérisée en ce que le traitement thermique consiste en une stérilisation par la chaleur, une pasteurisation, une concentration ou une déshydratation.

11. Utilisation suivant la revendication 1, caractérisée en ce que le traitement thermique est effectué à une température de 90°C à 140°C pendant un temps de 1 heure à 5 minutes.

12. Utilisation suivant la revendication 1, caractérisé en ce que la protéine fortement hydrosoluble est une protéine dérivée du lait, des oeufs, d'un tissu animal ou du soja.

13. Utilisation suivant la revendication 1, caractérisé en ce que la protéine est une poudre de lait écrémé, une poudre de protéines du petit-lait, une poudre de blanc d'oeuf, une poudre de jaune d'oeuf, une poudre d'ovalbumine, un caséinate ou la gélatine.

14. Utilisation suivant la revendication 1, caractérisée en ce que la protéine est une poudre de lait écrémé contenant 34 % de protéines, utilisée en une quantité de 2,5 à 4,5 % en poids, sur la base du poids de la substance à base de fruits ou de légumes.

15. Utilisation suivant la revendication 1, caractérisée en ce que la protéine est une poudre de protéines du petit-lait contenant 80 % de protéines, utilisée en une quantité de 4 % à 7 % en poids, sur la base du poids de la substance à base de fruits ou de légumes.

16. Utilisation suivant la revendication 1, caractérisée en ce que la protéine est une matière protéique d'oeuf contenant 25 % à 96 % de protéines, utilisée en une quantité de 6 % à 10 % en poids sur la base du poids de la substance à base de fruits ou de légumes.

17. Utilisation suivant la revendication 1, caractérisée en ce que la protéine est une matière protéique de soja contenant 95 % de protéines, utilisée en une quantité de 5 % à 7 % en poids, sur la base du poids de la substance à base de fruits ou de légumes.

18. Utilisation suivant la revendication 1, caractérisée en ce que la protéine est la gélatine ou un caséinate, utilisé en une quantité de 4 % à 6 % en poids, sur la base du poids de la substance à base de fruits ou de légumes.
